# EUROPÄISCHE PATENTSCHRIFT

(11) **EP 2 390 145 B1**
(45) Veröffentlichungstag und Bekanntmachung des Hinweises auf die Patenterteilung: **25.02.2015**
(21) Anmeldenummer: 11167405.7
(22) Anmeldetag: 25.05.2011
(51) Int. Cl.: B60R 21/38

(54) **Feder- und Dämpfer-Baueinheit**
Spring and damper component
Composant de ressort et d'amortisseur

(30) Priorität: 27.05.2010 DE 102010029410
(43) Veröffentlichungstag der Anmeldung: 30.11.2011
(73) Patentinhaber: Bayerische Motoren Werke Aktiengesellschaft, 80809 München (DE); Stabilus GmbH, 56014 Koblenz (DE)
(72) Erfinder: Koestler, Ulrich, 85241, Hebertshausen (DE); Köhler, Arne, 81373, Muenchen (DE); Kaiser, Nadja, 56075, Koblenz (DE); Stein, Gerhard, 56414, Salz (DE)

(56) Entgegenhaltungen:
- DE-A1- 10 325 351
- DE-A1-102007 009 096
- DE-C1- 10 128 967
- GB-A- 2 452 333

## Beschreibung

Die Erfindung betrifft eine Feder- und Dämpfer-Baueinheit für eine in eine Fußgängerschutzlage verstellbare Frontklappe eines Kraftfahrzeugs mit den im Oberbegriff des Patentanspruches 1 bzw. des Patentanspruchs 2 angegebenen Merkmalen.

Eine derartige Feder- und Dämpfer-Baueinheit dürfte in der DE 103 25 351 B4 verwendet sein, die eine Öffnungseinrichtung aufweist, die in einem Zylinder einen Gasdruckdämpfer mit einem Dämpfungskolben aufweisen dürfte, von dem eine durch das gasförmige Medium durch eine axiale Öffnung im Zylinder nach außen belastete Kolbenstange absteht, die ein Öffnen der Frontklappe unterstützt. Die Feder- und Dämpfer-Baueinheit weist auch eine Verstelleinrichtung auf, die einen Aktor bildet, der bei einem Fußgängeraufprall durch eine Sensoreinrichtung aktiviert die Frontklappe in eine erhöhte Fußgängerschutzlage anhebt. Unter der in die Fußgängerschutzlage hochgestellten Frontklappe dürfte sich eine Federungs- und/oder Dämpfungseinrichtung befinden, die einen Aufprall eines Fußgängers auf die in der Fußgängerschutzlage befindliche Frontklappe abfedern und/oder dämpfen kann. Die Kolbenstange oder der Zylinder oder ein damit verbundenes Bauteil der Federund Dämpfer-Baueinheit ist gegenüber einem die Baueinheit abstützenden Stützteil zwischen Anschlägen derart begrenzt axial verstellbar, dass die Öffnungseinrichtung auf dem gesamten Verstellweg der Frontklappe von der Schließlage in die erhöhte Fußgängerschutzlage entkoppelt und damit wirkungslos ist. Auf diese Weise dürfte zwar bei einem Fußgängeraufprall die Frontklappe schnell in die Fußgängerschutzlage hochstellbar sein. Es ist jedoch damit zu rechnen, dass die Frontklappe dabei einen Schwingvorgang ausführt, bei dem die Frontklappe erst nach wenigstens einem Über- und wenigstens einem Unterschwingen der Fußgängerschutzlage auf die Fußgängerschutzlage einschwingt. Prallt ein Fußgänger während einem derartigen Über- oder Unterschwingen der Frontklappe gegenüber der Fußgängerschutzlage auf die Frontklappe auf, kann die Frontklappe bzw. die darunter befindliche Federungs- und/oder Dämpfungseinrichtung den Fußgängeraufprall eventuell nicht optimal abfangen.

Der Erfindung liegt die Aufgabe zu Grunde, eine Feder- und Dämpfer-Baueinheit für eine in eine Fußgängerschutzlage verstellbaren Frontklappe eines Kraftfahrzeugs mit den Merkmalen jeweils im Oberbegriff der unabhängigen Patentansprüche 1 und 2 anzugeben, die bei einem von einem Aktor bewirkten Hochstellen der Frontklappe in die Fußgängerschutzlage ein schnelleres Einstellen der Frontklappe auf die Fußgängerschutzlage bewirkt.

Diese Aufgabe ist jeweils durch die in den unabhängigen Patentansprüchen 1 und 2 angegebenen Merkmale gelöst. Vorteilhafte Ausgestaltungen der Erfindung sind den Unteransprüchen entnehmbar.

Bei den beiden unabhängigen Patentansprüchen 1 und 2 ist gemeinsam vorgesehen, dass die Kolbenstange oder der Zylinder oder ein damit verbundenes Bauteil der Feder- und Dämpfer-Baueinheit gegenüber einem die Baueinheit abstützenden Stützteil zwischen Anschlägen derart begrenzt axial verstellbar ist, dass die Federund Dämpfer-Baueinheit nur in einem Anfangsverstellbereich des Verstellweges der Frontklappe von der Schließlage in die Fußgängerschutzlage entkoppelt ist. Am Ende des Anfangsverstellweges liegt die Kolbenstange oder der Zylinder oder ein jeweils damit verbundenes Bauteil an einem Anschlag derart an, dass beim weiteren, von dem Aktor bewirkten Hochstellen der Frontklappe in die Fußgängerschutzlage der Dämpfer der Feder- Dämpfer-Baueinheit wirksam ist. Das weitere Hochstellen der Frontklappe in die Fußgängerschutzlage wird dann von dem Dämpfer derart gedämpft, dass sich die Frontklappe schneller auf die Fußgängerschutzlage einstellt, in der ein Fußgängeraufprall optimal abgefangen werden kann, um dabei Verletzungen zu vermeiden oder wesentlich herab zu setzen. Überraschend bewirkt der zu dem angegebenen Zeitpunkt wirksame Dämpfer kein verlangsamtes, sonder ein schnelleres Einstellen der Frontklappe auf die Fußgängerschutzlage.

Die beiden unabhängigen Patentansprüche 1 und 2 enthalten außerdem konstruktive Einzelheiten zu im Wesentlichen zwei Ausführungsbeispielen, mit denen ein vorzögertes Wirksamwerden des Dämpfers möglich ist.

Gemäß dem unabhängigen Patentanspruch 1 ist vorgesehen, dass das Bauteil oder Stützteil ein in einer Gelenkpfanne gelagerter Kugelkopf oder ein Gelenkkopf mit ei ner Gelenkpfanne für einen Kugelkopf ist, und der Kugelkopf oder der Gelenkkopf zumindest mittelbar mit der Kolbenstange oder dem Zylinder verbunden ist und die Gelenkpfanne in Achsrichtung der Kolbenstange bzw. des Zylinders rinnenförmig ausgebildet ist. Ein axialer Verstellweg, bei dem die Feder- Dämpfer-Baueinheit nicht wirksam ist, ist somit bei dieser Ausführung durch ein entsprechendes relatives Verstellen des Kugelkopfes in der rinnenförmigen Gelenkpfanne realisiert, wobei der Verstellbereich durch ein Zusammenwirken des Kugelkopfes mit den Endbereichen der rinnenförmigen Gelenkpfanne in beiden entgegen gesetzten Verstellrichtungen begrenzt ist.

Der unabhängige Patentanpruch 2 sieht vor, dass das Bauteil oder Stützteil ein in einer Gelenkpfanne gelagerter Kugelkopf oder ein Gelenkkopf mit einer Gelenkpfanne für einen Kugelkopf ist, und der Kugelkopf oder Gelenkkopf radial innnen bereichsweise zylinderabschnittförmig ausgebildet und an einen zylinderabschnittförmigen äußeren Bereich des Zylinders oder der Kolbenstange angenähert und von einer axial auf einen zylinderabschnittförmigen Außenbereich des Gelenkkopfes oder Kugelkopfes und auf einen zumindest näherungsweise zylindrischen Bereich des Zylinders bzw. der Kolbenstange aufgesteckten und lagegesicherten Buchse in seiner Lage begrenzt axial verstellbar festgelegt ist. Ein axialer Verstellbereich, in dem der Dämpfer der Feder- Dämpfer-Baueinheit nicht wirksam ist, ist in diesem Fall zwischen dem Kugelkopf bzw. Gelenkkopf und der betreffenden Kolbenstange oder dem Zylinder durch wenige einfache Bauteile realisiert. Diese können beispielsweise einzeln gegen andere fahrzeugspezifische Bauteile ausgetauscht werden, wenn die Feder- Dämpfer-Baueinheit bei einem anderen Fahrzeug eines gleichen oder anderen Fahrzeugherstellers verwendet werden soll.

Zwei Ausführungsbeispiele der Erfindung werden anhand einer Zeichnung nähererläutert. Es zeigen
- Fig. 1: ein erstes Ausführungsbeispiel in einer vereinfachten Schnittansicht durch eine Kugelkopfverbindung der Kolbenstange, wobei nach einem von dem Aktor bewirkten Anfangsverstellweg der Frontklappe der Dämpfer wirksam ist,
- Fig. 2: eine Fig. 1 entsprechende Ansicht, in der die Frontklappe geschlossen ist und der Aktor und Dämpfer nicht wirken,
- Fig. 3: die den Figuren 1 und 2 entsprechende Kugelkopfverbindung in einer Seitenansicht,
- Fig. 4: ein zweites Ausführungsbeispiel in einer vereinfachten Schnittansicht durch eine Befestigungseinrichtung zur Fixierung eines Gelenkkopfes an einer Kolbenstange,
- Fig. 5: einen Querschnitt durch die in Fig. 4 zur Lagesicherung des Gelenkkopfes an der Kolbenstange verwendete Buchse,
- Fig. 6: eine Seitenansicht des Gelenkkopfes in Fig. 4,
- Fig. 7: eine gegenüber Fig. 6 um die Längsachse des Gelenkkopfes gedrehte Ansicht auf die Gelenkpfanne des Gelenkkopfes und
- Fig. 8: eine Fig. 4 entsprechende Ansicht bei noch nicht von der Buchse an der Kolbenstange in der Einbaulage gesichertem Gelenkkopf.

Ein erstes Ausführungsbeispiel einer Feder- und Dämpfer-Baueinheit, die beispielsweise an ihren Endbereichen jeweils direkt oder mittelbar an einer nicht dargestellten Frontklappe und an der ebenfalls nicht dargestellten Karosserie eines Kraftfahrzeugs angelenkt ist weist in einem nicht dargestellten Zylinder einen Gasdruckdämpfer mit einem Differenzdruck-Dämpfungskolben auf, der zwischen zwei von einem gasförmigen Medium druckbelasteten Arbeitsräumen axial verstellbar angeordnet ist. In dem Dämpfungskolben oder in dem Zylinder oder in einer die Arbeitsräume verbindenden Leitung ist wenigstens eine Drosselöffnung ausgebildet, die bei Längenänderungen der Feder- Dämpfungs-Baueinheit von dem gasförmigen Medium gedrosselt durchströmt wird und einerseits an der mit dem Dämpfungskolben verbundenen und von dem gasförmigen Medium durch eine axiale Öffnung im Zylinder nach außen belasteten Kolbenstange 1 und andererseits an dem Zylinder eine der Längenänderung der Feder- und Dämpfer-Baueinheit entgegen wirkende Dämpfkraft bewirkt. Durch den Differenzdruck-Dämpfungskolben, an dem die Druckkräfte des gasförmigen Mediums in den beiden Arbeitsräumen des Zylinders durch die einseitig von dem Dämpfungskolben abstehende Kolbenstange 1 unterschiedliche axiale Druckkräfte, bzw. in der Summe eine Kraft bei dem Ausführungsbeispiel zur Verlängerung der Feder- Dämpfungs-Baueinheit bewirkt, ist eine Gasfeder gebildet, die an der Frontklappe in Öffnungsrichtung wirkt und dadurch ein normales Öffnen der Frontklappe unterstützt.

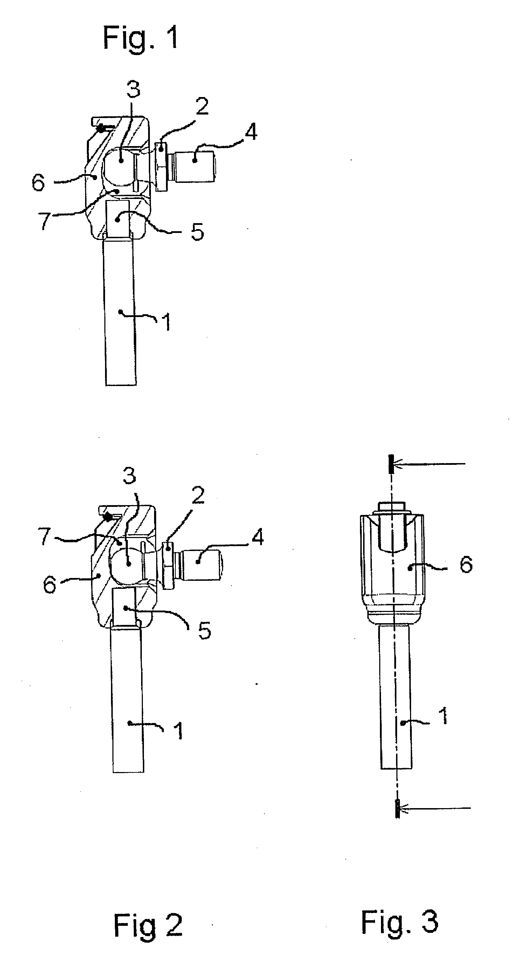

Bei dem ersten Ausführungsbeispiel ist die Kolbenstange 1 der Feder- Dämpfungs-Baueinheit über ein Stützteil 2 an der Frontklappe oder an der Karosserie abgestützt, das einen Kugelkopf 3 aufweist, der über eine Schraubverbindung 4 mit Verdrehsicherung an der Frontklappe oder an der Karosserie fixiert ist. Am freien Endbereich der Kolbenstange 1 ist beispielsweise über eine weitere Schraubverbindung 5 mit Verdrehsicherung ein Gelenkkopf 6 mit einer Gelenkpfanne 7 für den Kugelkopf 3 befestigt. Die Gelenkpfanne 7 ist in Achsrichtung der Kolbenstange 1 rinnenförmig ausgebildet, wodurch der Kugelkopf 3 in der Gelenkpfanne 7 in Richtung der Längsachse der Kolbenstange 1 von den Endbereichen der rinnenförmigen Gelenkpfanne 7 begrenzt axial verstellbar ist. Der Verstellbereich des Kugelkopfes 3 in der Gelenkpfanne 7 entspricht einem Anfangsverstellweg der Frontklappe von der Schließlage in Richtung der Fußgängerschutzlage, in dem der Dämpfer der Feder-Dämpfer-Baueinheit im Wesentlichen wirkungslos ist. Dieser entsprechende Anfangsverstellweg ist geringer als die Längenänderung der Feder- Dämpfungs-Baueinheit, die sich beim Verstellen der Frontklappe von der Schließlage in die Fußgängerschutzlage ergibt. Beim weiteren, von dem Aktor bewirkten Verstellen der Frontklappe vom Ende des Anfangsverstellweges bis in die Fußgängerschutzlage wirkt der Dämpfer der Feder- Dämpfer-Baueinheit dämpfend, wodurch sich überraschend die Frontklappe schneller und ohne ein wesentliches Über- oder Unterschwingen der Fußgängerschutzlage auf die Fußgängerschutzlage einstellt. Dabei liegt der Kugelkopf 3 an dem in Fig. 1 dargestellten Endbereich der Gelenkpfanne 7 ständig an.

Zur Sicherung des Kugelkopfes 3 in der Gelenkpfanne 7 ist bei dem Ausführungsbeispiel im Bereich einer Zugangsöffnung der Gelenkpfanne 7 eine Nut ausgebildet, in die ein nicht dargestellter, radial elastischer Sicherungsring eingreift.

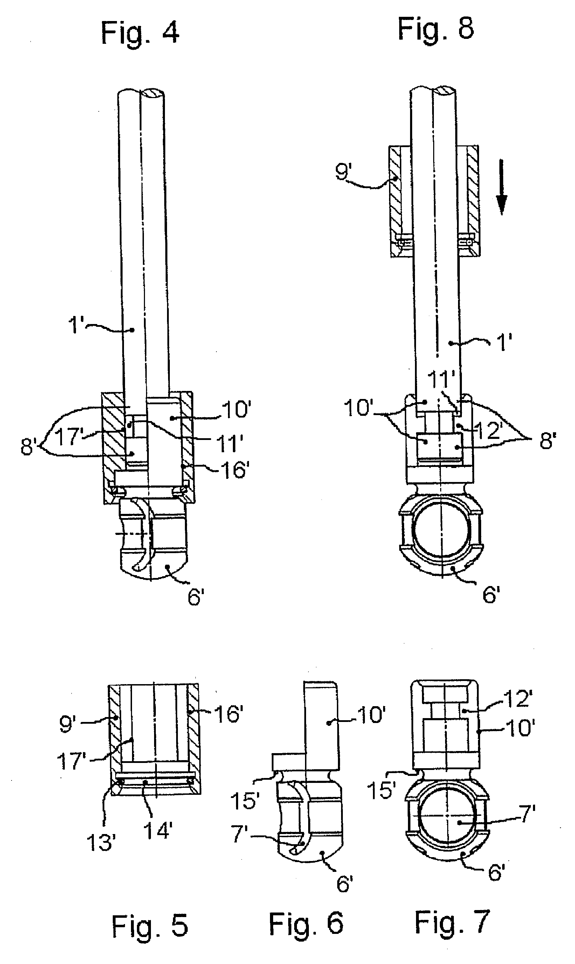

Ein zweites Ausführungsbeispiel der Erfindung wird nachfolgend anhand der Figuren 4 bis 8 beschrieben. Mit dem ersten Ausführungsbeispiel vergleichbare oder überein stimmende Bauteile sind bei dem zweiten Ausführungsbeispiel mit einer gleichen Bezugszahl und zur besseren Unterscheidung mit einem hochgestellten Zeichen versehen. Auch bei dem zweiten Ausführungsbeispiel ist an der Frontklappe eines Kraftfahrzeugs neben einer Feder- Dämpfungs-Baueinheit ein nicht dargestellten Aktor vorgesehen, der bei einem Fußgängeraufprall von einer Sensoreinrichtung aktiviert die Frontklappe in eine erhöhte Fußgängerschutzlage verstellt, in der die Frontklappe einen Aufprall beispielsweise des Kopfes oder des Oberkörpers eines Fußgängers günstiger abfangen kann.

Die dem zweiten Ausführungsbeispiel entsprechende Feder- und Dämpfer-Baueinheit ist ebenfalls direkt oder mittelbar an einer Frontklappe und an der Karosserie des Kraftfahrzeugs angelenkt. In einem nicht dargestellten Zylinder ist ein Gasdruckdämpfer mit einem Differenzdruck-Dämpfungskolben angeordnet, von dem eine durch das gasförmige Medium durch eine axiale Öffnung im Zylinder nach außen belastete Kolbenstange 1' absteht, die ein Öffnen der Frontklappe unterstützt.

Ein nicht dargestellter Aktor, der von einer nicht abgebildeten Sensoreinrichtung aktiviert wurde, verstellt die in den Figuren nicht erkennbare Frontklappe in eine erhöhte Fußgängerschutzlage.

Eine mit dem Differenzdruck-Dämpfungskolben im Zylinder der Feder- Dämpfungs-Baueinheit verbundene Kolbenstange 1' ist gegenüber einem Gelenkkopf 6' mit einer Gelenkpfanne 7' für einen nicht dargestellten Kugelkopf eines an der Frontklappe oder an der Karosserie befestigten Stützteiles ist zwischen Anschlägen begrenzt axial verstellbar. Der nicht dargestellte Kugelkopf kann dem in den Figuren 1 und 2 dargestellten Kugelkopf 1 des ersten Ausführungbeispiels entsprechen.

Der Gelenkkopf 6' ist bei dem zweiten Ausführungsbeispiel radial innen bereichsweise etwa halbzylinderförmig mit einem dem Außendurchmesser der Kolbenstange entsprechenden Innendurchmesser ausgebildet. Wurde der Gelenkkopf 6' wie in Figur 8 dargestellt an einen im Durchmesser angepassten, im Wesentlichen zylindrischen äußeren Bereich 8' der Kolbenstange 1' angenähert, kann durch axiales Aufschieben einer Buchse 9' in Richtung des Pfeiles in Fig. 8 auf einen zylinderabschnittförmigen Außenbereich 10' des Gelenkkopfes 6' und auf einen im Durchmesser entsprechenden zylindrischen Bereich 8' der Kolbenstange 1' der Gelenkkopf 6' in Anlage an der Kolbenstange 1' gehalten werden.

Ein axiales Fixieren des Gelenkkopfes 6' an der Kolbenstange 1' erfolgt bei dem Ausführungsbeispiel durch eine radiale Vertiefung 11' in der Kolbenstange 1', in die ein in der Breite angepasster, von dem etwa halbzylinderförmigen Bereich des Gelenkkopfes 6'radial nach innen vorstehender Kragen 12' eingreift.

Zur axialen Fixierung der Buchse 9' in der Einbaulage ist ein beispielsweise in den Figuren 4 und 5 erkennbarer Federring 13' vorgesehen, der radial elastisch in einer Aufnahmevertiefung 14' in der Buchse 9' unverlierbar angeordnet ist und bei in der Montagelage befindlicher Buchse 9' selbsttätig eine Stützschulter 15' an dem Gelenkkopf 6' hintergreift.

Die Erfindung kann von dem Ausführungsbeispiel abweichend ausgeführt werden. Das Bauteil oder das die Feder- Dämpfer-Baueinheit abstützende Stützteil kann ein in einer Gelenkpfanne gelagerter Kugelkopf oder ein Gelenkkopf mit einer Gelenkpfanne für einen Kugelkopf sein. Der Kugelkopf oder der Gelenkkopf kann zumindest mittelbar mit der Kolbenstange oder dem Zylinder verbunden sein. Die Gelenkpfanne kann in Achsrichtung rinnenförmig ausgebildet sein, wodurch der Kugelkopf in der Gelenkpfanne begrenzt axial verstellbar ist. Der Kugelkopf oder Gelenkkopf kann radial innen bereichsweise etwa halbzylinderförmig ausgebildet und an einen zylindrischen äußeren Bereich des Zylinders oder der Kolbenstange angenähert und von einer axial auf einen zylinderabschnittförmigen Außenbereich des Gelenkkopfes oder Kugelkopfes und auf einen im Durchmesser entsprechenden zylindrischen Bereich des Zylinders bzw. der Kolbenstange aufgesteckten und lagegesicherten Buchse in seiner Lage begrenzt axial verstellbar festgelegt sein. Bei einem durch den Aktor bewirkten Verstellen der Frontklappe in die Fußgängerschutzlage nach oben kann ein Bereich des Zylinders oder der Kolbenstange oder des Kugelkopfes oder des Gelenkkopfes oder des Bauteiles an einem Anschlag eines anderen Teiles anliegen. Bei einem weiteren, durch den Aktor und/oder die Gasdruckfeder und/oder ein weiteres, vorgespanntes Federelement bewirkten Verstellen der Frontklappe in die Fußgängerschutzlage ist der Gasdruckdämpfer der Feder- und Dämpfer-Baueinheit an der Frontklappe dämpfend wirksam, wodurch die Frontklappe nicht oder kaum oder weniger über die Fußgängerschutzlage hinaus nach oben und/oder nach unten überschwingt. Der Differenzdruck-Dämpfungskolben ist zwischen zwei von dem gasförmigen Medium druckbelasteten Arbeitsräumen axial verstellbar, die über wenigstens eine Drosselöffnung im Zylinder oder des Dämpfungskolbens oder in einer die beiden Arbeitsräume verbindenden Leitung verbunden sind. Das Stützteil kann ein in einer Gelenkpfanne gelagerter Kugelkopf oder ein Gelenkkopf mit einer Gelenkpfanne für einen Kugelkopf sein, der beispielsweise allein oder über ein Zwischenteil drehfest gehalten ist. Der Kugelkopf kann allein oder über ein beliebiges Sicherungsteil festgehalten sein. Der Kugelkopf oder Gelenkkopf kann in beliebiger Weise an der Kolbenstange oder an der Frontklappe oder an der Karosserie festgehalten sein. Bei Verwendung der Buchse kann diese in der Einbaulage in beliebiger Weise an der Kolbenstange oder an dem Zylinder oder an dem Kugelkopf oder an dem Gelenkkopf festgehalten sein. Die zylinderabschnittförmigen Innenbereiche und der zylinderabschnittförmige Außenbereich jeweils der Buchse können sich über einen beliebigen Winkel in Umfangsrichtung erstrecken, der ausreichend ist die Buchse und den Kugelkopf bzw. Gelenkkopf zu fixieren. Dabei ist es möglich, dass der Kugelkopf oder Gelenkkopf drehbar oder drehfest zumindest mittelbar an der Kolbenstange fixiert ist. Die Buchse kann jeweils radial innen zwei zylindrische Innenbereiche aufweisen, die zueinander axial versetzt sind, von denen ein zylindrischer Innenbereich an den zumindest zylinderabschnittförmigen oder zylindrischen Außenbereich des Kugelkopfes oder Gelenkkopfes angepasst und der andere zylindrische Innenbereich der Buchse an den benachbarten Außendurchmesser der Kolbenstange angepasst sind. Der in einer Gelenkpfanne gelagerte Kugelkopf kann ein Verschwenken der Feder- Dämpfer-Baueinheit in einer Ebene oder im Raum ermöglichen. Unter dem Kugelkopf ist auch ein Gelenkkopf zu verstehen, der einen Bolzen aufweist, um dessen Achse die Feder-Dämpfer-Baueinheit schwenkbar ist.

## Patentansprüche

1. Feder- und Dämpfer-Baueinheit für eine in eine Fußgängerschutzlage verstellbare Frontklappe eines Kraftfahrzeugs, die jeweils direkt oder mittelbar an der Frontklappe und an einer Karosserie des Kraftfahrzeugs anlenkbar ist und in einem Zylinder einen Gasdruckdämpfer mit einem Dämpfungskolben aufweist, von dem eine durch das gasförmige Medium durch eine axiale Öffnung Im Zylinder nach außen belastete Kolbenstange (1) absteht, die angepasst ist, ein Öffnen der Frontklappe zu unterstützen, mit einem Aktor, der angepasst ist, von einer Sensoreinrichtung aktiviert die Frontklappe in eine erhöhte Fußgängerschutzlage zu verstellen, wobei die Kolbenstange (1) oder der Zylinder oder ein damit verbundenes Bauteil (6) gegenüber einem die Baueinheit abstützenden Stützteil (2) zwischen Anschlägen in eine Achsrichtung des Zylinders bzw. der Kolbenstange (1) begrenzt axial verstellbar ist,
**dadurch gekennzeichnet, dass**
das Bauteil oder Stützteil ein in einer Gelenkpfanne (7) gelagerter Kugelkopf (3) oder ein Gelenkkopf (6) mit einer Gelenkpfanne (7) für einen Kugelkopf (3) ist, und der Kugelkopf oder Gelenkkopf (6) zumindest mittelbar mit der Kolbenstange (1) oder dem Zylinder verbunden ist, und die Gelenkpfanne (7) in die Achsrichtung rinnenförmig ausgebildet ist, wodurch der Kugelkopf (3) in der Gelenkpfanne (7) derart begrenzt axial verstellbar ist, dass die Feder- und Dämpfer-Baueinheit nur in einem Anfangsverstellbereich des Verstellweges der Frontklappe von der Schließlage in die Fußgängerschutzlage entkoppelt ist und beim weiteren, von dem Aktor bewirkten Hochstellen der Frontklappe In die Fußgängerschutzlage der Dämpfer der Feder- und Dämpfer-Baueinheit wirksam ist.

2. Feder- und Dämpfer-Baueinheit für eine in eine Fußgängerschutzlage verstellbare Frontklappe eines Kraftfahrzeugs, die jeweils direkt oder mittelbar an der Frontklappe und an einer Karosserie des Kraftfahrzeugs anlenkbar ist und in einem Zylinder einen Gasdruckdämpfer mit einem Dämpfungskolben aufweist, von dem eine durch das gasförmige Medium durch eine axiale Öffnung im Zylinder nach außen belastete Kolbenstange (1') absteht, die angepasst ist, ein Öffnen der Frontklappe zu unterstützen, mit einem Aktor, der angepasst ist, von einer Sensoreinrichtung aktiviert die Frontklappe in eine erhöhte Fußgängerschutzlage zu verstellen, wobei die Kolbenstange (1') oder der Zylinder oder ein damit verbundenes Bauteil (6') gegenüber einem die Baueinheit abstützenden Stützteil oder gegenüber einem mit dem Stützteil zumindest mittelbar verbundenen Zwischenteil zwischen Anschlägen in eine Achsrichtung des Zylinders bzw. der Kolbenstange (1') begrenzt axial verstellbar ist,
**dadurch gekennzeichnet, dass**
das Bauteil oder Stützteil ein in einer Gelenkpfanne (7') gelagerter Kugelkopf oder ein Gelenkkopf (6') mit einer Gelenkpfanne (7') für einen Kugelkopf ist, und der Kugelkopf oder Gelenkkopf (6') radial innen bereichsweise zumindest zylinderabschnittförmig ausgebildet und an einem etwa zylindrischen äußeren Bereich des Zylinders oder der Kolbenstange (1') angenähert ist und von einer axial auf einen zumindest zylinderabschnittförmigen Außenbereich des Gelenkkopfes (6') oder Kugelkopfes und auf einen etwa zylindrischen Bereich des Zylinders bzw. der Kolbenstange (1') aufgesteckten und lagegesicherten Buchse (9') in seiner Lage derart begrenzt axial verstellbar festgelegt ist, dass die Feder- und Dämpfer-Baueinhelt nur in einem Anfangsverstellbereich des Verstellweges der Frontklappe von der Schließlage in die Fußgängerschutzlage entkoppelt ist und beim weitern, von dem Aktor bewirkten Hochstellen der Frontklappe in die Fußgängerschutzlage der Dämpfer der Feder- und Dämpfer-Baueinheit wirksam ist.

3. Feder- und Dämpfer-Baueinheit nach Patentanspruch 1 oder 2, **dadurch gekennzeichnet, dass** bei einem durch den Aktor bewirkten Verstellen der Frontklappe in die Fußgängerschutzlage nach oben ein Bereich des Zylinders oder der Kolbenstange (1') oder des Kugelkopfes (3) oder des Gelenkkopfes oder des Bauteiles an einem Anschlag eines anderen Teiles (6, 6') anliegt und dadurch bei einem weiteren, durch den Aktor und/oder die Gasdruckfeder und/oder ein weiteres, vorgespanntes Federelement bewirkten Verstellen der Frontklappe in die Fußgängerschutzlage der Gasdruckdämpfer der Feder- und Dämpfer-Baueinheit an der Frontklappe dämpfend wirksam wird, wodurch die Frontklappe nicht oder kaum oder weniger über die Fußgängerschutzlage hinaus nach oben und/oder nach unten überschwingt.

4. Feder- und Dämpfer-Baueinheit nach einem der Patentansprüche 1 bis 3, **dadurch gekennzeichnet, dass** der Dämpfungskolben ein Differenzdruck-Dämpfungskolben ist, der zwischen zwei von dem gasförmigen Medium druckbelasteten Arbeitsräumen axial verstellbar ist, die über wenigstens eine Drosselöffnung im Zylinder oder des Dämpfungskolbens oder in einer die beiden Arbeitsräume verbindenden Leitung verbunden sind.

5. Feder- und Dämpfer-Baueinheit, nach einem der Patentansprüche 1, 3, 4, **dadurch gekennzeichnet, dass** das Stützteil ein in einer Gelenkpfanne (7,7') gelagerter Kugelkopf (3) oder ein Gelenkkopf mit einer Gelenkpfanne für einen Kugelkopf ist, die oder der einen Gewindeansatz (4) aufweist, der in ein Gewinde an der Frontklappe oder der Karosserie oder an einem damit verbundenen Zwischenteil einschraubbar und über eine Verdrehsicherung drehfest gehalten ist.

6. Feder- und Dämpfer-Baueinheit nach einem der Patentansprüche 1, 3 bis 5, **dadurch gekennzeichnet, dass** der Kugelkopf (3) über ein Sicherungsteil, beispielsweise einen im Bereich einer Zugangsöffnung der Gelenkpfanne (7, 7') in eine Nut in der Gelenkpfanne (7, 7') eingreifenden Sicherungsring in der Gelenkpfanne (7, 7') festgehalten ist, und entweder der Kugelkopf oder der Gelenkkopf (6, 6') auf oder in ein Gewinde am Zylinder oder an der Kolbenstange (1, 1') oder an einem damit verbundenen Bauteil auf- oder einschraubbar ist.

7. Feder- und Dämpfer-Baueinheit nach einem der Patentansprüche 2 bis 5, **dadurch gekennzeichnet, dass** zur axialen Fixierung des Kugelkopfes oder Gelenkkopfes (6') am äußeren Stirnbereich der Kolbenstange (1') entweder in dem zylinderabschnittförmigen Innenbereich des Kugelkopfes oder Gelenkkopfes eine radiale Vertiefung ausgebildet ist, in die ein radialer Vorsprung an der Kolbenstange eingreift, oder an der Kolbenstange eine radiale Vertiefung (11') ausgebildet ist, in die ein radial nach innen vorstehender Kragen (12') an dem zylinderabschnittförmigen Innenbereich des Kugelkopfes oder Gelenkkopfes (6') eingreift.

8. Feder- und Dämpfer-Baueinheit nach einem der Patentansprüche 2 bis 5, 7, **dadurch gekennzeichnet, dass** die Buchse (9') jeweils radial innen zwei etwa zylinderabschnittförmige Innenbereiche (16', 17') mit unterschiedlichen Durchmessern aufweist, von denen ein Bereich (16') an den Außendurchmesser des zumindest zylinderabschnittförmigen Außenbereiches (10') des Kugelkopfes oder Gelenkkopfes (6') und der andere Bereich (17') an einen etwa zylindrischen Außendurchmesser der Kolbenstange (1') angepasst sind, und die zumindest etwa zylinderabschnittförmigen Innenbereiche (16', 17') zumindest bereichsweise radial gegenüber oder axial direkt oder mit einem axialen Abstand jeweils nebeneinander angeordnet sind.

9. Feder- und Dämpfer-Baueinheit nach einem der Patentansprüche 2 bis 5, 7, **dadurch gekennzeichnet, dass** die Buchse jeweils radial innen zwei zylindrische Innenbereiche aufweist, die zueinander axial versetzt sind, von denen ein zylindrischer Innenbereich an den zumindest zylinderabschnittförmigen Außenbereich des Kugelkopfes oder Gelenkkopfes angepasst und der andere zylindrische Innenbereich der Buchse an den benachbarten Außendurchmesser der Kolbenstange angepasst sind.

10. Feder- und Dämpfer-Baueinheit nach einem der Patentansprüche 2 bis 9 **dadurch gekennzeichnet, dass** die Buchse (9') in der Einbaulage über einen radial elastischen Federring (13') axial fixiert ist, der jeweils in eine Aufnahmevertiefung (14') in der Buchse (9') und entweder in der Kolbenstange oder an dem Kugelkopf bzw. Gelenkkopf eingreift oder eine daran ausgebildete Stützschulter (15') hintergreift.

## Claims

1. A spring and damping unit for a vehicle bonnet adjustable in a passenger-protecting position, the unit being directly or indirectly pivotable on the bonnet and on a vehicle body and comprising a gas-pressure damper and piston in a cylinder, from which a piston rod (1), biased towards the exterior, projects through the gaseous medium and through an axial opening in the cylinder, the piston rod being adapted to assist opening the bonnet, also comprising an actuator adapted, when activated by a sensor device, to move the bonnet into a raised passenger-protecting position, wherein the piston rod (1) or cylinder or a component (6) connected thereto is axially adjustable to a limited extent between abutments relative to a supporting part (2) supporting the unit between stops in an axial direction of the cylinder or piston rod (1),
**characterised in that**
the component or supporting part is a spherical head (3) mounted in a socket (7) or a link head (6) comprising a socket (7) for a spherical head (3), and the spherical head or link head (6) is at least indirectly connected to the piston rod (1) or cylinder, and the socket (7) is channel-shaped in the axial direction, with the result that the spherical head (3) in the socket (7) is axially adjustable to a limited extent so that the spring and damping unit is uncoupled only in an initial region of the travel of the bonnet from the closed position into the passenger protecting position, whereas the spring and damping unit is operative when the bonnet is raised by the actuator into the passenger-protecting position of the damper.

2. A spring and damper unit for a vehicle bonnet movable into a passenger-protecting position, directly or indirectly pivotable to the bonnet and to a vehicle body and comprising a gas pressure damper and a damping piston in a cylinder, from which a piston rod (1') biased towards the exterior projects through the gaseous region and through an axial opening in the cylinder, the piston rod being adapted to assist opening the bonnet, also comprising an actuator adapted, when actuated by a sensor device, to move the bonnet into a first passenger-protecting position, wherein the piston rod (1') or cylinder or a component (6') connected thereto is axially adjustable to a limited extent relative to a supporting part supporting the unit or relative to an intermediate part connected at least indirectly to the supporting part between stops in an axial direction of the cylinder or piston rod (1'),
**characterised in that**
the component or supporting part is a spherical head mounted in a socket (7') or a link head (6') with a socket (7') for a spherical head, and the spherical head or link head (6') is at least cylindrical at places, radially inward, and is near an approximately cylindrical outer region of the cylinder or piston rod (1') and is secured in position with limited axial movement by a sleeve (9') axially mounted and secured on at least a cylindrical outer region of the link head (6') or spherical head and on an approximately cylindrical region of the cylinder or piston rod (1'), such that the spring and damping unit is uncoupled only when in an initial region of the adjustment travel of the bonnet from the closed position into the passenger-protection region, whereas the spring and damping unit is operative when the bonnet is additionally raised by the actuator into the passenger-protecting position of the damper.

3. A spring and damping unit according to claim 1 or claim 2, **characterised in that** when the bonnet is moved by the actuator into the passenger-protecting position upwards, a region of the cylinder or piston rod (1') or spherical head (3) or link head or of the component abuts a stop on another part (6, 6') and thus, after a further adjustment of the bonnet by the actuator and/or the gas pressure spring and/or another prestressed spring element into the passenger-protecting position of the gas-pressure damper, the spring and damping unit on the bonnet has a damping effect, with the result that the bonnet is unable or less or scarcely able to swing out upwards and/or downwards beyond the passenger protecting position.

4. A spring and damping unit according to any of claims 1 to 3, **characterised in that** the damping piston is a differential pressure damping piston axially adjustable between two work chambers pressurised by the gaseous medium, the chambers being connected via at least one throttle opening in the cylinder or damping piston or in a line connecting the two work chambers.

5. A spring and damping unit according to any of claims 1, 3, or 4, **characterised in that** the supporting part is a spherical head (3) in a socket (7, 7') or a link head and socket for a spherical head comprising a screw-threaded attachment (4) which is screwable into a screw thread on the bonnet or body or on to a connected intermediate part and is non-rotatably held by a locking piston.

6. A spring and damping unit according to any of claims 1 or 3 to 5, **characterised in that** the spherical head (3) is held in the socket (7, 7') by a securing part, e.g. a securing ring in the neighbourhood of the access opening to the socket (7, 7') and engaging in a groove in the socket (7, 7'), and either the spherical head or the link head (6, 6') is screwable on to or into a screw thread on the cylinder or on the piston rod (1, 1') or on to a component connected thereto.

7. A spring and damping component according to any of claims 2 to 5, **characterised in that** in order axially to fix the spherical head or link head (6') to the outer end region of the piston rod (1'), a radial recess in which a radial projection on the piston rod engages is formed in the cylindrical inner region of the spherical head or link head or a radial recess (11') in which a radially inwardly projecting collar (12') on the cylindrical inner region of the spherical head or link head (6') engages is formed on the piston rod.

8. A spring and damping unit according to any of claims 2 to 5 or 7, **characterised in that** the sleeve (9') in each case has two radially approximatedly cylindrical inner regions (16', 17') having different diameters, one region (16') being adapted to the outer diameter of the at least cylindrical outer region (10') of the spherical head or link head (6') and the other region (17') being adapted to an approximately cylindrical outer diameter of the piston rod (1'), and the at least approximately cylindrical inner regions (16', 17'), at least at places, are disposed radially opposite one another or directly axially adjacent or with axial spacing from one another.

9. A spring and damping unit according to any of claims 2 to 5 or 7, **characterised in that** each sleeve has two radially inward cylindrical inner regions axially offset from one another, one cylindrical inner region being adapted to the at least cylindrical outer region of the spherical head or link head and the other cylindrical inner region of the sleeve being adapted to the neighbouring outer diameter of the piston rod.

10. A spring and damping unit according to any of claims 2 to 9, **characterised in that** the sleeve (9') is axially fixed in the installed position by a radially resilient spring ring (13') which respectively engages in a recess (14') in the sleeve (9') and either in the piston rod or on the spherical head or link head or engages behind a supporting shoulder (15') formed thereon.

## Revendications

1. Ensemble à ressort et amortisseur destiné à un volet frontal d'un véhicule pouvant être déplacé dans une position de protection des piétons, pouvant respectivement être articulé directement ou indirectement sur le volet frontal et sur la carrosserie du véhicule, et, qui comporte dans un cylindre, un amortisseur à pression de gaz comprenant un piston d'amortissement, d'où s'écarte par une ouverture axiale du cylindre, une tige de piston (1) sollicitée vers l'extérieur par le fluide gazeux qui est susceptible d'assister l'ouverture du volet frontal, et un actionneur, qui est susceptible de déplacer le volet frontal dans une position de protection des piétons relevée, en étant activé par un dispositif de capteur, la tige de piston (1) ou le cylindre ou un élément (6) relié à cette tige ou à ce cylindre pouvant être déplacé axialement de façon limitée, dans la direction axiale du cylindre ou de la tige de piston (1), par rapport à un élément d'appui (2) supportant l'ensemble, entre des butées,
**caractérisé en ce que**
l'ensemble ou l'élément d'appui est une tête sphérique (3) logée dans une coupelle articulaire (7), ou une tête articulaire (6) avec une coupelle articulaire (7) pour une tête sphérique (3), et la tête sphérique ou la tête articulaire (6) est reliée au moins de manière indirecte avec la tige de piston (1) ou le cylindre, et la coupelle articulaire (7) est réalisée en forme de gouttière dans la direction axiale, de sorte que la tête sphérique (3) puisse être déplacée axialement de manière limitée dans la coupelle articulaire (7) de façon que l'ensemble à ressort et amortisseur ne soit désolidarisé que dans la plage de déplacement initiale de la course du volet frontal de la position de fermeture vers la position de protection des piétons, et que, lors d'une poursuite du déplacement vers le haut du volet frontal commandée par l'actionneur, vers la position de protection des piétons, l'amortisseur de l'ensemble à ressort et amortisseur soit actif.

2. Ensemble à ressort et amortisseur destiné à un volet frontal d'un véhicule pouvant être déplacé dans une position de protection des piétons, pouvant respectivement être articulé directement ou indirectement sur le volet frontal et sur la carrosserie du véhicule, et, qui comporte dans un cylindre, un amortisseur à pression de gaz comprenant un piston d'amortissement, d'où s'écarte par une ouverture axiale du cylindre, une tige de piston (1') sollicitée vers l'extérieur par le fluide gazeux, qui est susceptible d'assister l'ouverture du volet frontal, et un actionneur, qui est susceptible de déplacer le volet frontal dans une position de protection des piétons relevée, en étant activé par un dispositif de capteur, la tige de piston (1') ou le cylindre ou un élément (6') relié à cette tige ou à ce cylindre pouvant être déplacé axialement de façon limitée dans la direction axiale du cylindre ou de la tige de piston (1') par rapport à un élément d'appui supportant l'ensemble, ou par rapport à un élément intermédiaire relié au moins indirectement à l'élément d'appui, entre des butées,
**caractérisé en ce que**
l'ensemble ou l'élément d'appui est une tête sphérique logée dans une coupelle articulaire (7'), ou une tête articulaire (6') avec une coupelle articulaire (7') pour une tête sphérique, et la tête sphérique ou la tête articulaire (6') est réalisée radialement vers l'intérieur par zones au moins en forme de segments de cylindre, et se rapproche d'une zone externe essentiellement cylindrique du cylindre ou de la tige de piston (1'), et, peut être bloquée dans sa position en pouvant être déplacée axialement de façon limitée par une douille (9') pouvant être emboitée et fixée axialement sur une zone externe au moins en forme de segments de cylindre de la tête articulaire (6') ou de la tête sphérique et sur une zone essentiellement cylindrique du cylindre ou de la tige de piston (1'), de sorte que l'ensemble à ressort et amortisseur ne soit désolidarisé que dans la plage de déplacement initiale de la course du volet frontal de la position de fermeture vers la position de protection des pistons, et que lors d'une poursuite du déplacement vers le haut du volet frontal commandée par l'actionneur vers la position de protection des piétons, l'amortisseur de l'ensemble à ressort et amortisseur soit actif.

3. Ensemble à ressort et amortisseur conforme à la revendication 1 ou 2,
**caractérisé en ce que**
lors d'un déplacement commandé par l'actionneur du volet frontal dans la position de protection des piétons vers le haut, une zone du cylindre ou de la tige de piston (1') ou de la tête sphérique (3) ou de la tête articulaire ou de l'ensemble s'appuie contre une butée d'un autre élément (6, 6'), et, ainsi, lors d'une poursuite du déplacement du volet frontal dans la position de protection des piétons, commandée par l'actionneur et/ou le ressort à pression gazeuse et/ou un autre élément élastique précontraint, l'amortisseur à pression de gaz de l'ensemble à ressort et amortisseur agit en tant qu'amortisseur sur le volet frontal, et par suite le volet frontal ne dépasse pas ou uniquement dans une faible mesure vers le haut et/ou vers le bas de la position de protection des piétons.

4. Ensemble à ressort et amortisseur conforme à l'une des revendications 1 à 3,
**caractérisé en ce que**
le piston d'amortissement est un piston d'amortissement à pression différentielle qui peut être déplacé axialement entre deux chambres de travail sollicitées en pression par le fluide gazeux qui sont reliées par l'intermédiaire d'au moins une ouverture d'étranglement située dans le cylindre ou le piston d'amortissement, ou dans une conduite reliant les deux chambres de travail.

5. Ensemble à ressort et amortisseur conforme à l'une des revendications 1, 3, 4,
**caractérisé en ce que**
l'élément d'appui est une tête sphérique (3) logée dans une coupelle articulaire (7, 7'), ou une tête articulaire avec une coupelle articulaire pour une tête sphérique qui comporte un prolongement fileté (4) qui peut être vissé dans un filetage du volet frontal ou de la carrosserie ou d'un élément intermédiaire relié à ces éléments, et est maintenu fixe en rotation par un élément de blocage en rotation.

6. Ensemble à ressort et amortisseur conforme à l'une des revendications 1, 3 à 5,
**caractérisé en ce que**
la tête sphérique (3) est fixée dans la coupelle articulaire (7, 7') par un élément de blocage, par exemple une bague de blocage venant en prise, dans la zone d'une ouverture d'accès de la coupelle articulaire (7, 7', dans une rainure réalisée dans la coupelle articulaire (7, 7'), et, soit la tête sphérique soit la tête articulaire (6, 6') peut être vissée sur ou dans un filetage réalisé sur le cylindre ou la tige de piston (1, 1') ou un élément relié à ceux-ci.

7. Ensemble à ressort et amortisseur conforme à l'une des revendications 2 à 5,
**caractérisé en ce que**
pour permettre la fixation axiale de la tête sphérique ou de la tête articulaire (6') dans la zone frontale externe de la tige de piston (1'), une cavité radiale est formée dans la zone interne en forme de segment de cylindre de la tête sphérique ou de la tête articulaire, cavité radiale dans laquelle vient en prise une saillie radiale de la tige de piston, ou, sur la tige de piston est formée une cavité radiale (11') dans laquelle vient en prise une collerette (12') faisant saillie radialement vers l'intérieur sur la zone interne en forme de segment de cylindre de la tête sphérique ou de la tête articulaire (6').

8. Ensemble à ressorts et amortisseurs conforme à l'une des revendications 2 à 5, 7,
**caractérisé en ce que**
la douille (9') comporte, radialement vers l'intérieur deux zones internes (16', 17') respectives essentiellement en forme de segment de cylindre ayant des diamètres différents dont une zone (16') est adaptée au diamètre externe de la zone externe (10') de la tête sphérique ou de la tête articulaire (6') au moins en forme de segment de cylindre, tandis que l'autre zone (17') est adaptée au diamètre externe essentiellement cylindrique de la tête de piston (1'), et les zones internes (16', 17') au moins essentiellement en forme de segments de cylindre sont respectivement positionnées au moins par zone radialement en regard ou axialement côte à côte directement ou à distance axiale.

9. Ensemble à ressort et amortisseur conforme à l'une des revendications 2 à 5, 7,
**caractérisé en ce que**
la douille comporte respectivement, radialement vers l'intérieur deux zones internes cylindriques qui sont décalées axialement l'une par rapport à l'autre, dont l'une est adaptée à la zone externe au moins en forme de segment de cylindre de la tête sphérique ou de la tête articulaire tandis que l'autre zone interne cylindrique de la douille est adaptée au diamètre externe voisin de la tige de piston.

10. Ensemble à ressort et amortisseur conforme à l'une des revendications 2 à 9,
**caractérisé en ce que**
dans la position de montage, la douille (9') est fixée axialement par l'intermédiaire d'une bague élastique radiale (13') qui vient respectivement en prise dans une cavité de réception (14') dans la douille (9') et, soit dans la tige de piston soit dans la tête sphérique ou la tête articulaire, ou s'engage en arrière dans un épaulement d'appui (15') réalisé sur cet élément.
